# DEMANDE DE BREVET EUROPEEN

(11) **EP 2 015 038 A1**
(43) Date de publication de la demande: **14.01.2009**
(21) Numéro de dépôt: 08159815.3
(22) Date de dépôt: 07.07.2008
(51) Int. Cl.: G01J 5/20, H04N 5/33

(54) **Capteur électronique à régulation thermique intégrée**

(30) Priorité: 13.07.2007 FR 0756483
(71) Demandeur: COMMISSARIAT A L'ENERGIE ATOMIQUE, 75015 Paris (FR)
(72) Inventeur: Chammings, Gilles, 38100, GRENOBLE (FR); Dupont, Bertrand, 38000, GRENOBLE (FR); Tchagaspanian, Michael, 38330, SAINT ISMIER (FR); Martin, Jean-Luc, 38620, SAINT GEOIRE EN VALDAINE (FR)
(74) Mandataire: Ilgart, Jean-Christophe

(57) **Abrégé**

Capteur d'image thermique (100) comportant au moins :
- une matrice de pixels (102), chaque pixel comportant au moins un bolomètre et des moyens pour appliquer une tension aux bornes du bolomètre, et
- des moyens de comparaison (106) reliant une sortie (104) de la matrice de pixels (102) à une entrée (108) des moyens pour appliquer la tension déterminée aux bornes du bolomètre de chaque pixel, lesdits moyens de comparaison (106) étant aptes à réaliser une comparaison entre le signal de sortie de la matrice de pixels (102) et une consigne, la valeur de la tension aux bornes du bolomètre de chaque pixel étant déterminée au moins en partie en fonction du résultat de la comparaison.

## Description

### DOMAINE TECHNIQUE ET ART ANTÉRIEUR

L'invention concerne le domaine des capteurs électroniques, et plus particulièrement celui des capteurs d'image thermique tels que les capteurs à bolomètres, utilisés par exemple dans le domaine de l'imagerie infrarouge.

Les bolomètres sont des résistances variant en fonction de la température mesurée. Ainsi, en imposant une tension fixe aux bornes d'un bolomètre, les variations de la température mesurée par le bolomètre influent sur la valeur de sa résistance, et donc sur la valeur du courant le traversant.

Cette température provient essentiellement de la température ambiante. L'apport énergétique provenant d'un flux infrarouge incident que l'on souhaite mesurer apporte lui aussi une élévation de température, mais dans des proportions moindres que la température ambiante : alors que la valeur de la résistance du bolomètre diminue d'environ 1,6 % pour une augmentation de la température de scène (celle provenant du flux infrarouge incident que l'on souhaite mesurer) de 50 K, la valeur de cette résistance est divisée par deux lorsque la température ambiante passe par exemple de 300 K à 325 K.

Jusqu'à présent, pour palier à ce problème, le capteur était placé dans un boîtier comportant un système de régulation thermique, par exemple de type module Peltier, afin de maintenir une température ambiante constante. Mais un tel système de régulation thermique pose de gros problèmes d'encombrement et de coût.

### EXPOSÉ DE L'INVENTION

Un but de la présente invention est de proposer un capteur d'image thermique ne nécessitant pas l'utilisation d'un système de régulation thermique supplémentaire tel qu'un module Peltier, pour affranchir le capteur des changements de température ambiante.

Pour cela, la présente invention propose un capteur d'image thermique comportant au moins :
- une matrice de pixels, chaque pixel comportant au moins un bolomètre et des moyens pour appliquer une tension aux bornes du bolomètre, et
- des moyens de comparaison reliant une sortie de la matrice de pixels à une entrée des moyens pour appliquer la tension aux bornes du bolomètre de chaque pixel, lesdits moyens de comparaison étant aptes à réaliser une comparaison entre le signal de sortie de la matrice de pixels et une consigne, la valeur de la tension aux bornes du bolomètre de chaque pixel étant déterminée au moins en partie en fonction du résultat de la comparaison.

Ainsi, on réalise une régulation électronique des effets de la température ambiante sur le capteur, pouvant par exemple utiliser la capacité des grilles de transistors MOS d'injection associés aux bolomètres dans la matrice de pixels.

En contrôlant la tension appliquée aux bornes des bolomètres, cette tension étant commune à tous les bolomètres du capteur, par exemple par l'intermédiaire de la tension appliquée sur les grilles des transistors MOS d'injection, on impose la valeur du courant de polarisation circulant dans ces bolomètres. Ainsi, le courant moyen traversant les bolomètres correspond à la consigne souhaitée. Il est donc par exemple possible de centrer le signal de sortie, analogique ou numérique, de la matrice de pixels, au milieu de la dynamique de sortie souhaitée, en agissant sur un signal d'entrée (tension de grille) qui influe directement sur la grandeur (courant de polarisation) qui est ensuite convertie, fournissant le signal de sortie de la matrice de pixels.

Ce bouclage peut être utilisé avec un capteur fournissant un signal de sortie analogique ou numérique en utilisant un comparateur adapté.

On entend par consigne, ici et dans tout le reste du document, une valeur prédéterminée ou une plage de valeurs comprises entre deux valeurs limites.

La matrice de pixels peut comporter des moyens aptes à délivrer un signal sur la sortie de la matrice de pixels. Le signal délivré par ces moyens peut être obtenu à partir d'une mesure du bolomètre de chaque pixel.

La matrice de pixels peut comporter des moyens de multiplexage de signaux obtenus à partir de mesures des bolomètres des pixels, les signaux multiplexés pouvant être ensuite délivrés sur la sortie de la matrice de pixels.

Les moyens pour appliquer une tension aux bornes du bolomètre de chaque pixel peuvent comporter un transistor MOS, l'entrée de ces moyens étant reliée à la grille du transistor MOS.

La matrice de pixels peut comporter au moins des moyens aptes à apporter au bolomètre un courant fonction de la température ambiante, ces moyens pouvant comporter au moins un bolomètre de compensation.

La matrice de pixels peut comporter au moins des moyens aptes à compenser une partie du courant délivré par le bolomètre de chaque pixel, ces moyens pouvant comporter au moins un bolomètre de compensation.

La matrice de pixels peut comporter au moins des moyens de conversion d'une mesure du bolomètre de chaque pixel en un signal comportant une série d'impulsions, des moyens de comptage des impulsions et des moyens de mémorisation du résultat de comptage des impulsions.

Dans ce cas, les moyens de conversion peuvent comporter au moins un condensateur d'intégration relié à une entrée des moyens de conversion et à une première entrée d'un comparateur, une seconde entrée du comparateur pouvant être reliée à un générateur de tension.

La matrice de pixels peut alors délivrer dans ce cas un signal numérique.

La matrice de pixels peut comporter au moins un amplificateur courant-tension destiné à recevoir en entrée au moins une mesure d'un bolomètre d'un des pixels, la sortie dudit amplificateur courant-tension pouvant être reliée à au moins une entrée d'un échantillonneur bloqueur.

Dans ce cas, la matrice de pixels peut délivrer un signal analogique.

Les moyens de comparaison peuvent comporter au moins :
- une première entrée apte à recevoir le signal de sortie de la matrice de pixels,
- une seconde entrée apte à recevoir la consigne,
- des moyens aptes à délivrer en sortie des moyens de comparaison un courant de sortie i dont la valeur |i| peut être fonction d'une tension de polarisation destinée à être appliquée sur les moyens de comparaison et dont le signe peut être déterminé en fonction du résultat de la comparaison entre le signal de sortie de la matrice de pixels et la consigne,
la valeur de la tension aux bornes du bolomètre étant fonction du courant de sortie i délivré par les moyens de comparaison.

Dans ce cas, les moyens aptes à délivrer en sortie des moyens de comparaison le courant de sortie i peuvent comprendre au moins :
- un miroir de courant formé par deux transistors PMOS,
- un premier transistor NMOS dont la grille peut être reliée à la seconde entrée,
- un second transistor NMOS dont la grille peut être reliée à la première entrée,
- un troisième transistor NMOS relié aux premier et second transistors NMOS,
la tension de polarisation pouvant être appliquée sur la grille du troisième NMOS.

Les moyens de comparaison peuvent comporter au moins :
- une première entrée apte à recevoir le signal de sortie de la matrice de pixels,
- des moyens aptes à délivrer en sortie des moyens de comparaison un courant de sortie i dont la valeur |i| peut être fonction d'une tension de polarisation obtenue dans les moyens de comparaison et dont le signe peut être déterminé en fonction du résultat de la comparaison entre le signal de sortie de la matrice de pixels et la consigne,
la valeur de la tension aux bornes du bolomètre étant fonction du courant de sortie i délivré par les moyens de comparaison.

Dans ce cas, les moyens aptes à délivrer en sortie des moyens de comparaison le courant de sortie i peuvent comprendre au moins :
- un premier miroir de courant formé par deux transistors PMOS,
- un second miroir de courant formé par deux transistors NMOS,
- un troisième transistor NMOS dont la grille peut être reliée à la première entrée et dont la source et le drain peuvent être reliés respectivement à la source et au drain de l'un des deux transistors NMOS du second miroir de courant,
- un troisième transistor PMOS dont la grille peut être reliée à la première entrée et dont la source et le drain peuvent être reliés respectivement à la source et au drain de l'un des deux transistors PMOS du second miroir de courant,
- une résistance reliée entre le troisième transistor NMOS et le troisième PMOS, la tension de polarisation pouvant être la tension obtenue aux bornes de cette résistance.

Lorsque le signal de sortie de la matrice de pixels est numérique, un ou plusieurs bits de poids fort du signal de sortie peuvent être destinés à être appliqués sur une ou plusieurs bornes de la première entrée des moyens de comparaison.

Les moyens de comparaison peuvent comporter une pluralité de transistors MOS, la valeur de la tension de polarisation pouvant être au moins en partie fonction de la largeur et à la longueur de canal des transistors MOS.

Les moyens de comparaison peuvent comporter en outre au moins une résistance, la valeur de la tension de polarisation pouvant être au moins en partie fonction de la valeur de la résistance.

La présente invention concerne également un procédé de mesure d'une température par un capteur d'image thermique, comportant au moins les étapes suivantes :
- génération d'un signal représentatif de la température mesurée,
- comparaison de la valeur du signal à une consigne,
- correction de la valeur du signal en fonction du résultat de la comparaison.

La génération du signal représentatif de la température mesurée peut être obtenue par la mise en oeuvre des étapes suivantes :
- génération d'un premier signal dont la valeur de l'intensité est fonction de la valeur de la température mesurée,
- conversion du premier signal en un second signal impulsionnel dont le nombre d'impulsions est fonction de la valeur de l'intensité du premier signal,
- comptage du nombre d'impulsions du second signal,
le signal représentatif de la température mesurée pouvant comporter le nombre d'impulsions comptées.

La correction de la valeur du signal en fonction du résultat de la comparaison peut être réalisée en modifiant la valeur de l'intensité du premier signal.

Le signal représentatif de la température mesurée pouvant être un signal numérique, le procédé de mesure peut être mis en oeuvre pendant une durée τ = n x Tₜᵣₐₘₑ, avec n : nombre de niveaux de quantification du signal représentatif de la température mesurée, et Tₜᵣₐₘₑ : temps de capture d'une image par le capteur.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente un capteur d'image thermique, objet de la présente invention, selon un mode de réalisation particulier,
- la figure 2A représente une partie d'une matrice de pixels utilisée dans un capteur, objet de la présente invention, selon une première variante de réalisation,
- la figure 2B représente un exemple de convertisseur d'une tension en un signal impulsionnel,
- les figures 3A et 3B représentent une partie d'une matrice de pixels utilisée dans un capteur, objet de la présente invention, respectivement selon une seconde et une troisième variante de réalisation,
- la figure 4 représente un premier exemple de comparateur utilisé dans un capteur, objet de la présente invention,
- la figure 5 représente la valeur moyenne d'un signal analogique obtenu en sortie d'un capteur, objet de la présente invention, comportant le comparateur représenté sur la figure 4,
- la figure 6 représente un second exemple de comparateur utilisé dans un capteur, objet de la présente invention,
- la figure 7 représente la valeur moyenne d'un signal numérique obtenu en sortie d'un capteur, objet de la présente invention, comportant le comparateur représenté sur la figure 5,
- la figure 8 représente la valeur moyenne d'un signal numérique obtenu en sorti d'un capteur, objet de la présente invention, comportant un comparateur réalisant une comparaison à partir des deux bits de poids fort du signal numérique,
- la figure 9 représente un exemple de comparateur réalisant une comparaison à partir des deux bits de poids fort d'un signal numérique de sortie d'un capteur, objet de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

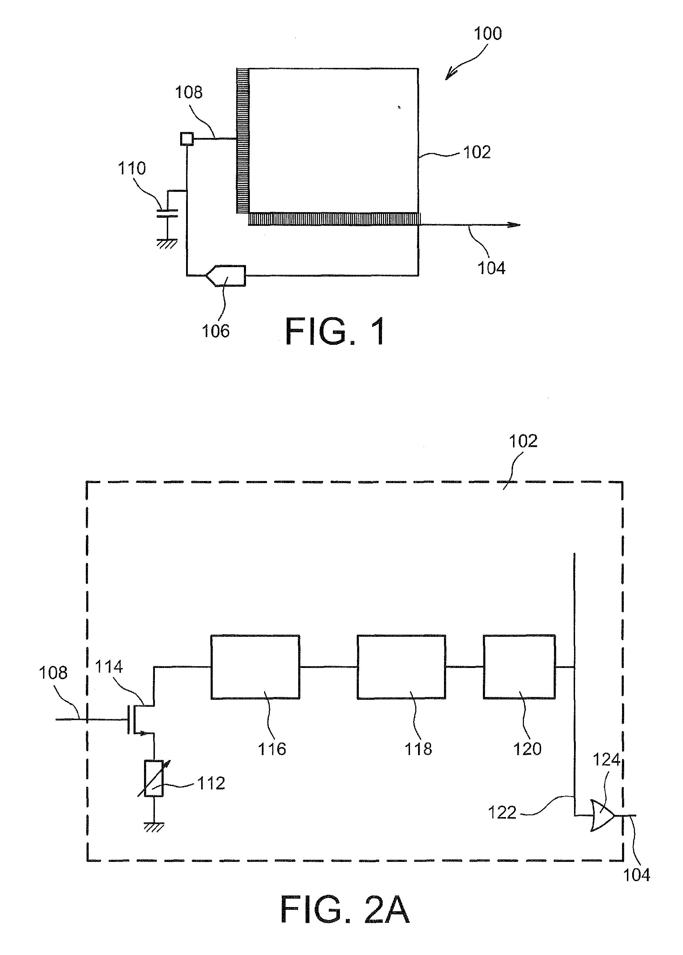

On se réfère tout d'abord à la figure 1 qui représente un capteur 100 selon un mode de réalisation particulier.

Le capteur 100 comporte une matrice de pixels 102 comprenant par exemple 76800 pixels répartis sur 240 lignes et 320 colonnes. Une sortie 104 de la matrice de pixels 102 forme la sortie du capteur 100. La sortie 104 de la matrice 102 est reliée à l'entrée de moyens de comparaison 106, ou comparateur 106. Enfin, la sortie du comparateur 106 est reliée à une entrée 108 de la matrice de pixels 102.

Dans le mode de réalisation particulier décrit en liaison avec la figure 1, un condensateur 110 peut également être relié à l'entrée 108 de la matrice de pixels 102, en parallèle à la connexion entre la sortie du comparateur 106 et l'entrée 108 pour augmenter la valeur de la constante de temps d'asservissement ou de rebouclage comme expliqué ultérieurement dans cette description.

L'image capturée par la matrice de pixels 102 est délivrée sous forme d'un signal numérique ou analogique sur la sortie 104. Le comparateur 106 réalise la comparaison entre la valeur du signal de sortie représentant l'image capturée, délivré par la matrice de pixels 102, et la valeur d'une consigne correspondant par exemple à la valeur moyenne vers laquelle la sortie de la matrice de pixels 102 est destinée à tendre. Dans une variante, cette consigne peut être une plage de valeurs comprises entre deux valeurs limites, la valeur moyenne du signal délivré en sortie de la matrice de pixels étant destinée à être comprise dans cette plage de valeurs.

Le résultat de cette comparaison est ensuite envoyé sur l'entrée 108 de la matrice de pixels 102. Un bouclage est donc réalisé entre la sortie 104 et l'entrée 108 de la matrice de pixels 102 par l'intermédiaire du comparateur 106, permettant ainsi de faire tendre la valeur moyenne du signal de sortie de la matrice de pixels 102 vers une valeur souhaitée ou une plage de valeurs souhaitées.

Une partie de la matrice de pixels 102, dans le cas d'une capture numérique d'images, est représentée schématiquement sur la figure 2A. Sur cette figure 2A, un seul bolomètre 112, formant la partie de capture d'un pixel de la matrice 102, est représenté. La matrice de pixels 102 comporte ici autant de bolomètres que de pixels. Le bolomètre 112 est relié à la source d'un transistor NMOS d'injection 114. L'entrée 108 de la matrice 102 est reliée à la grille du transistor NMOS 114. Le drain du transistor NMOS 114 est relié à des moyens de conversion, ou un convertisseur, 116 transformant la valeur de la tension appliquée en entrée en un signal comportant une série d'impulsions. La sortie du convertisseur 116 est reliée à des moyens de comptage, ou compteur, 118, lui-même relié à des moyens de mémorisation 120. Le convertisseur 116, le compteur 118 et les moyens de mémorisation 120 forment un circuit de lecture du bolomètre 112.

La sortie des moyens de mémorisation 120 est reliée à un bus 122, commun à tous les moyens de mémorisation d'une même colonne de pixels, ou d'une même ligne de pixels, de la matrice 102. Le bus 122, ainsi que tous les autres bus de la matrice 102 des autres colonnes ou lignes de pixels, est relié à un multiplexeur 124 réalisant un multiplexage des signaux de tous les bus de la matrice 102 et dont la sortie forme la sortie de la matrice de pixels 102. Lorsque le signal délivré en sortie du multiplexeur 124 est un signal analogique, il est possible de relier la sortie du multiplexeur 124 à un convertisseur analogique - numérique, non représenté. De même, lorsque le signal délivré en sortie du multiplexeur 124 est un signal numérique, il est possible de relier la sortie du multiplexeur 124 à un convertisseur numérique - analogique, également non représenté. Ce convertisseur peut faire partie de la matrice de pixels 102 ou être disposé à l'extérieur de cette matrice.

Le circuit de lecture du bolomètre 112 convertit le courant circulant dans le bolomètre 112 en un signal comportant une série d'impulsions, la fréquence des impulsions étant fonction de la valeur du courant circulant dans le bolomètre 112. Les impulsions sont ensuite comptabilisées pendant un temps de comptage correspondant à un temps de capture ou de mesure par le bolomètre 112. Le nombre d'impulsions comptabilisées est ensuite délivré en sortie du circuit de lecture, ce nombre étant représentatif du courant passant dans le bolomètre 112, c'est-à-dire de la mesure réalisée par le bolomètre 112.

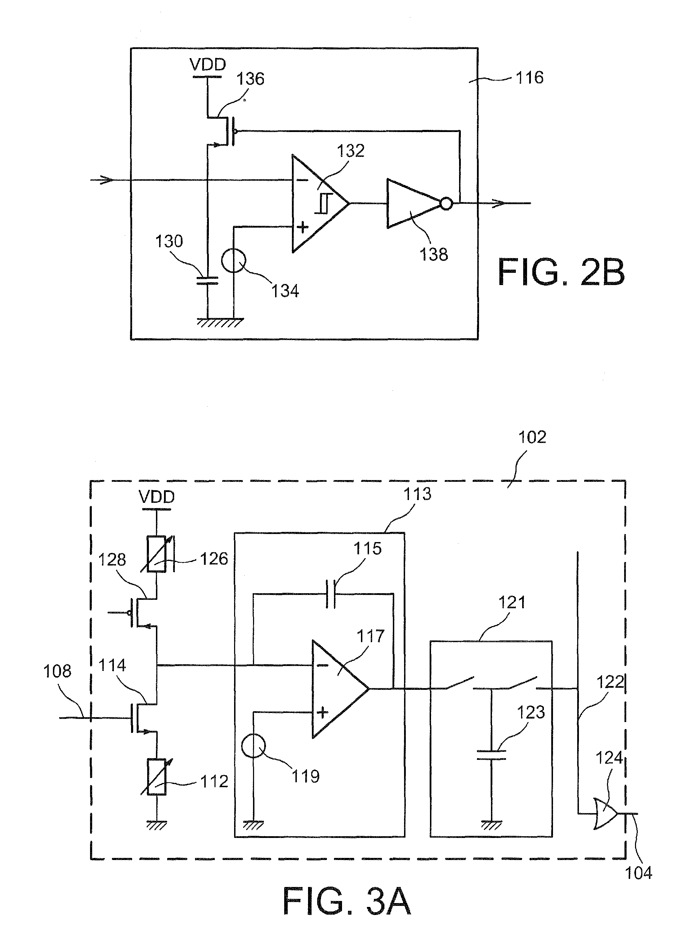

Un exemple de réalisation du convertisseur 116 est représenté sur la figure 2B. Le convertisseur 116 comporte un condensateur d'intégration 130 relié à l'entrée du convertisseur 116 et à une entrée inverseuse d'un comparateur 132. Une entrée non inverseuse du comparateur 132 est reliée à un générateur de tension 134. Un transistor PMOS 136 « de recharge » est placé entre l'entrée non inverseuse du comparateur 132 et la tension d'alimentation V_{DD}. Le transistor PMOS 136 et le condensateur 130 sont ainsi placés en série entre la masse et la tension d'alimentation V_{DD}. Un inverseur 138 est relié entre la sortie du comparateur 132 et la sortie du convertisseur 116.

Le fonctionnement de la matrice de pixels 102 va maintenant être détaillé. Une tension de polarisation Vg, correspondant au signal obtenu en sorti du comparateur 106, est appliquée sur l'entrée 108 de la matrice 102, c'est-à-dire sur la grille du transistor NMOS d'injection 114. La tension Vg étant constante pendant la durée de la mesure du bolomètre 112, la tension aux bornes du bolomètre 112 est également constante.

Ainsi, lorsque la température varie, la résistance du bolomètre 112 change, ce qui implique, compte tenu de la tension constante aux bornes du bolomètre 112, une variation du courant qui le traverse. Par exemple, pour une variation de la température de scène de 50 K, le courant circulant dans le bolomètre 112 varie d'environ 2 nA. Ce courant est puisé dans le condensateur d'intégration 130, faisant alors chuter la tension aux bornes de ce condensateur 130. Le générateur de tension 134 applique une tension de référence V_{ref}, par exemple égale à 2 V sur l'entrée non inverseuse du comparateur 132.

Préalablement à la capture, ou mesure, du bolomètre 112, le condensateur 130 est « préchargé » à la tension d'alimentation V_{DD} au moyen d'un transistor PMOS de précharge, non représenté, relié à la tension d'alimentation V_{DD}. Au démarrage de la capture, la tension aux bornes du condensateur 130 est sensiblement égale à la tension d'alimentation V_{DD}, puis elle diminue progressivement au cours de la capture. Quand le potentiel appliqué sur l'entrée inverseuse du comparateur 132, c'est-à-dire la tension aux bornes du condensateur 130, atteint V_{ref}, le comparateur 132 commute et le transistor PMOS 136 devient passant, entraînant la recharge du condensateur 130. Le comparateur 132 est par exemple un comparateur à hystérésis afin que le condensateur 130 puisse se recharger complètement, sensiblement jusqu'à V_{DD}, avant qu'il ne commute en sens opposé après un certain délai. Pendant ce premier cycle, grâce à la décharge et à la recharge du condensateur 130, une impulsion a été générée en sortie du comparateur 132.

Le compteur 118 s'incrémente à chaque impulsion reçue. Ainsi, le nombre d'impulsions générées en sortie du convertisseur 116 et comptées par le compteur 118 pendant une période de capture, ou période de comptage, déterminée est représentatif de la variation de la résistance du bolomètre 112, et donc de la variation de température induite par le rayonnement mesuré par le bolomètre 112. Les moyens de mémorisation 120 permettent de mémoriser le nombre d'impulsions comptabilisées par le compteur 118 à la fin de la période de capture.

Le compteur 118 peut par exemple être un compteur logique asynchrone pouvant être réalisé à partir de bascules D, délivrant alors un signal numérique, ou un compteur analogique comportant alors un condensateur dont la capacité permet de compter le nombre total d'impulsions du signal, chaque impulsion impliquant le stockage d'un certain nombre de charges dans le condensateur. Le signal délivré sur la sortie 104 de la matrice 102 est ensuite envoyé en entrée du comparateur 106.

La figure 3A représente de façon schématique une variante de réalisation analogique d'une partie de la matrice de pixels 102. Sur cette figure 3A, un seul bolomètre 112, formant la partie capteur d'un pixel de la matrice 102, est représenté, ainsi que le circuit de lecture de ce bolomètre 112.

Comme dans l'exemple de réalisation numérique représenté sur la figure 2A, le bolomètre 112 est piloté en tension par le transistor NMOS 114. Dans cet exemple de réalisation, la matrice 102 comporte un bolomètre de compensation 126 se trouvant en tête de colonne, c'est-à-dire commun à tous les bolomètres se trouvant sur une même colonne de pixels. Ce bolomètre de compensation 126 est disposé entre une tension d'alimentation V_{DD}, par exemple égale à 3,3 V, et le drain du transistor NMOS 114. Le bolomètre de compensation 126 est relié à un transistor PMOS 128 dont la grille est reliée à un potentiel externe ajusté pour compenser le courant traversant le bolomètre 112, c'est-à-dire apporter un courant inverse par rapport à celui traversant le bolomètre 112, et obtenir ainsi au niveau du drain du transistor NMOS 114 un courant qui soit la différence entre le courant circulant dans le bolomètre 112 et celui circulant dans le bolomètre de compensation 126, correspondant ainsi à la température de scène mésurée.

Le bolomètre de compensation 126 peut être thermalisé, c'est-à-dire qu'il n'est pas sensible à la température de scène mais uniquement à la température du substrat sur lequel il est réalisé afin de permettre de compenser au moins en partie les fluctuations de température du substrat, ou écranté, c'est-à-dire comportant un écran thermique le rendant insensible aux variations de température de la scène.

Du fait des dispersions du circuit (notamment de la résistance du bolomètre 112, de la tension de seuil du transistor NMOS d'injection 114 et d'un condensateur d'intégration 115), le courant circulant dans le bolomètre 112 varie par exemple entre 140 nA et 160 nA. Or, la variation du courant correspondant à une variation de température de scène de 50 K est de l'ordre de 2 nA. Le bolomètre de compensation 126 permet donc de compenser une grande partie du mode commun, par exemple égal à 140 nA, et donc d'obtenir le courant correspondant à la température de scène et le courant lié aux dispersions technologiques.

Dans une variante de réalisation, le bolomètre de compensation 126 peut être remplacé par un simple bolomètre, par exemple similaire au bolomètre 112, écranté. Le bolomètre 112 et le bolomètre de compensation 126 subissent donc tous les deux la même dérive due aux variations de la température, hormis les variations dues à la température de scène.

Le courant compensé, correspondant à la différence entre le courant circulant dans le bolomètre 112 et le courant circulant dans le bolomètre de compensation 126, est envoyé en entrée d'un amplificateur courant-tension 113 et est intégré par le condensateur d'intégration 115 reliant une entrée inverseuse de l'amplificateur opérationnel 117 à sa sortie, un générateur de tension 119 étant relié à une entrée non inverseuse de l'amplificateur opérationnel 117.

La tension obtenue en sortie de l'amplificateur courant-tension 113 est envoyée en entrée d'un échantillonneur bloqueur 121 comportant un condensateur 123 permettant de stocker la valeur de cette tension. La sortie de l'échantillonneur bloqueur 121 est reliée au bus 122 et au multiplexeur 124, comme dans l'exemple de réalisation numérique de la figure 2A, réalisant ainsi un multiplexage des signaux de tous les bus de la matrice 102, la sortie du multiplexeur 124 formant la sortie 104 de la matrice de pixels 102.

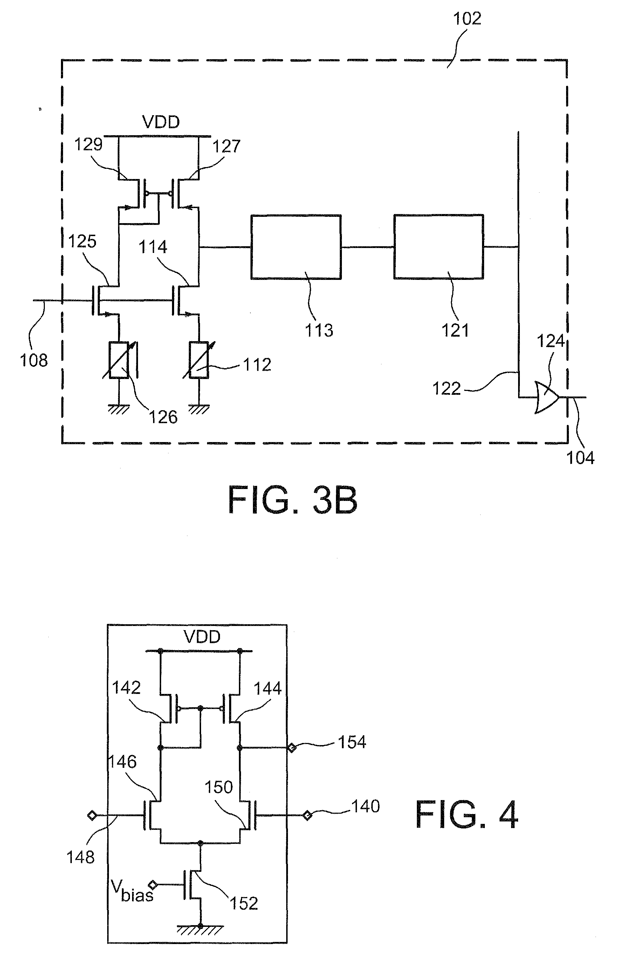

Une autre variante de réalisation analogique de cette partie de la matrice de pixels 102 est représentée schématiquement sur la figure 3B. Par rapport à la figure 3A, le transistor PMOS 128 est remplacé par un transistor NMOS 125 dont la grille est reliée à celle du transistor NMOS d'injection 114. Les drains des transistors NMOS 114 et 125 sont reliés à deux transistors PMOS 127 et 129 formant un miroir de courant. Ainsi, le courant circulant dans la branche formée par le transistor NMOS 125 et le bolomètre de compensation 126 est reproduit dans la branche formée par le bolomètre 112 et le transistor NMOS 114.

La figure 4 représente un premier exemple de réalisation d'un comparateur 106 pouvant être utilisé lorsque le signal délivré en sortie de la matrice de pixels 102 est sous forme analogique ou numérique. Ce comparateur 106 comporte une première entrée 140 sur laquelle est appliqué le signal de sortie de la matrice de pixels 102. Un miroir de courant est formé par deux transistors PMOS 142 et 144. Le comparateur 106 comporte également un premier transistor NMOS 146 dont la grille est reliée à une seconde entrée 148 sur laquelle est appliquée la consigne souhaitée. Le comparateur 106 comporte un second transistor NMOS 150 dont la grille est reliée à la première entrée 140. Enfin, un troisième transistor NMOS 152 est relié aux premier et second transistors NMOS 146 et 150.

Une tension de polarisation V_{bias} est appliquée sur la grille de ce troisième NMOS 152. La valeur de cette tension de polarisation V_{bias} est choisie en fonction d'un courant de polarisation I_{bias} souhaité, destiné à traverser le comparateur 106. Ce courant de polarisation I_{bias} est constant et égal à la somme du courant traversant la première branche formée par les transistors 142 et 146 et du courant traversant la seconde branche formée par les transistors 144 et 150. Enfin, une sortie 154 du comparateur 106 est reliée à l'entrée 108 de la matrice de pixels 102, c'est-à-dire à la grille du transistor NMOS d'injection 114 (et plus généralement aux grilles de tous les transistors NMOS d'injection de la matrice 102), en délivrant un courant i.

Ainsi, lorsque la consigne appliquée sur la seconde entrée 148 est comparée au signal d'entrée appliqué sur la première entrée 140 du comparateur 106, si le signal d'entrée est supérieur à la consigne (par exemple être égale à V_{DD}/2), il y a alors un courant de valeur i = -I_{bias} qui traverse les transistors NMOS 150 et 152 puisé dans la capacité formée par les grilles des transistors NMOS d'injection 114. Lorsque le capteur 100 comporte le condensateur 110 représenté sur la figure 1, la courant I_{bias} est également puisé dans ce condensateur 110. Un courant nul traverse les transistors 142, 144 et 146. Inversement, si la consigne est supérieure à la valeur du signal d'entrée, alors un courant de valeur I_{bias} traverse les transistors PMOS 142 et 144 et les transistors NMOS 146 et 152. Or, étant donné que le transistor NMOS 150 ne laisse pas passer le courant, alors un courant de valeur i = I_{bias} vient charger les capacités formées par les grilles des transistors MOS d'injection et éventuellement le condensateur 110.

On a donc sur la sortie 154 du comparateur 106 un courant dont la valeur est égale à + I_{bias} ou à - I_{bias} en fonction du résultat de la comparaison réalisée entre la consigne et le signal délivré par la matrice de pixels 102.

Cette comparaison de la sortie de chacun des pixels avec la tension de référence, ou consigne, V_{bias}, permet de générer un code. Ce code indique que le pixel traité a une valeur de sortie soit plus grande, soit plus petite que la valeur de référence que l'on souhaite avoir. Cette comparaison permet donc soit d'injecter du courant, soit de retirer du courant des grilles des transistors d'injection faisant ainsi varier le potentiel aux bornes de la capacité formée par les grilles des transistors MOS d'injection 114 sur laquelle ce courant transite et éventuellement aux bornes du condensateur 110. Le potentiel obtenu aux bornes de ces capacités correspond au potentiel Vg appliqué sur les grilles des transistors MOS d'injection 114.

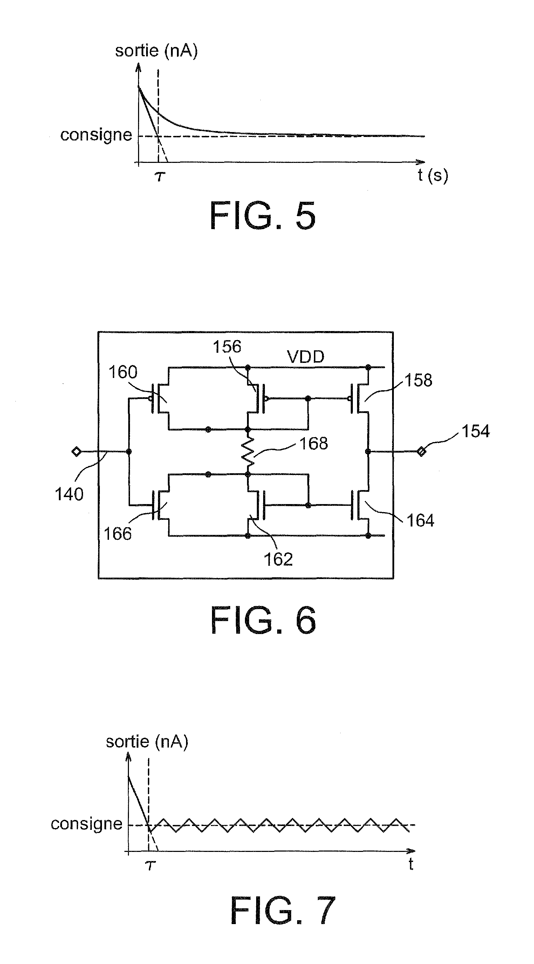

La figure 5 représente la valeur moyenne d'un signal de sortie analogique du capteur 100. Sur cette figure, la valeur mesurée au début de la capture par tous les pixels est supérieure à la consigne. On voit que plus le capteur réalise de mesures d'images, plus la valeur moyenne obtenue en sortie se rapproche de la consigne. En infrarouge, le haut (ciel) et le bas (terre) d'une image n'ont pas la même température ce qui se caractérise par des codes numériques différents. On peut donc avoir une constante de temps de rebouclage τ, c'est-à-dire le temps pendant lequel le capteur va réaliser des mesures en les renvoyant dans la boucle pour corriger la mesure, bien plus importante que le temps trame Tₜᵣₐₘₑ, c'est-à-dire le temps de capture d'une image. Sur la figure 5, on voit que la constante de temps τ correspond au temps où se croisent la droite y = consigne et la tangente à l'origine de la courbe de sortie. Par exemple, la constante de temps de rebouclage peut être égale à τ = 20 s, temps pendant lequel 1000 images peuvent être capturées par le capteur 100. La limite haute de cette constante de temps τ peut être donnée par la constante de temps thermique du boîtier ou de la camera dans laquelle se trouve le capteur 100.

L'ajout du condensateur 110 permet une adaptation globale et fournit une constante de temps τ plus importante par rapport au cas où seule la capacité des grilles des transistors MOS d'injection 114 forme une capacité entre la matrice de pixels 102 et le comparateur 106.

La figure 6 représente un second exemple de réalisation d'un comparateur 106 pouvant être utilisé lorsque le signal délivré en sortie de la matrice de pixels 102 est sous forme numérique. Ce comparateur 106 comporte un miroir de courant formé par deux transistors PMOS 156 et 158. Il comporte également un troisième transistor PMOS 160 relié en parallèle au PMOS 156, et dont la grille est reliée à l'entrée 140 du comparateur 106. Le comparateur 106 comporte également deux transistors NMOS 162 et 164 également montés en miroir de courant, et un troisième transistor NMOS 166 relié en parallèle au transistor NMOS 162, et dont la grille est reliée à l'entrée 140.

Dans ce second exemple de réalisation, seul le bit de poids le plus fort du signal numérique délivré sur la sortie 104 de la matrice de pixels 102 est pris en compte par le comparateur 106. Une résistance 168 est reliée entre le drain du transistor PMOS 156 et le drain du transistor NMOS 162. Dans cette variante de comparateur 106, la consigne n'est pas appliquée sur une entrée du comparateur 106, mais découle en partie de la valeur choisie de la résistance 168. Etant donné que la valeur de la tension aux bornes de la résistance 168 est constante, la valeur de la résistance 168 est choisie en fonction de la valeur du courant de polarisation I_{bias} souhaitée traversant cette résistance 168. Les transistors 156 et 162 sont également dimensionnés tel que le rapport de leur largeur W sur leur longueur de canal L soit égal à N fois le rapport W/L des transistors 158 et 164. On a alors I_{bias} = N × 1, i étant le courant qui est chargé ou puisé dans la capacité formée par les grilles des transistors MOS d'injection 114 reliés à la sortie 154 et éventuellement du condensateur 110. On voit que le comparateur 106 représenté sur cette figure 6 forme un convertisseur numérique-analogique.

En fonction de la valeur du bit de poids le plus fort du signal délivré sur l'entrée 140, le transistor PMOS 160 ou le transistor NMOS 166 devient passant, ce qui dans un cas charge la capacité des grilles des transistors MOS d'injection 114 par un courant de valeur i traversant la résistance 146, et dans l'autre cas, puise dans la capacité des grilles des transistors MOS d'injection 114 un courant de valeur i.

La figure 7 représente la valeur moyenne du signal obtenu en sortie lorsque le capteur 100 délivre un signal numérique. Sur cette figure, la valeur mesurée au début de la capture par tous les pixels est supérieure à la consigne. On voit qu'après un certain nombre de mesures, la valeur du signal oscille autour de la consigne. Là encore, les mesures peuvent être réalisées pendant une durée correspondant à la constante de temps τ, par exemple égale à 20 s. Un tel signal de sortie peut également être obtenu en utilisant une matrice de pixels délivrant en sortie un signal analogique qui est envoyé dans un convertisseur analogique-numérique tel qu'un comparateur binaire.

En fonction de l'excursion de scène et de la résolution désirée, on quantifie sur n niveaux l'information utile (n = nombre de bits du signal de sortie). Pour que les effets de la constante de temps ne dépasse pas un niveau de quantification, on choisi alors une constante de temps τ = n x Tₜᵣₐₘₑ, avec Tₜᵣₐₘₑ : temps de capture d'une image.

Ce bouclage du premier ordre cesse d'influencer la tension de grille des transistors MOS d'injection lorsque la consigne est atteinte : dès lors, le code généré dans le cas d'un signal de sortie analogique ou directement le ou les bits de poids fort du flot de sortie dans le cas numérique sera équiprobable (aura autant de 1 et de O dans le cas du numérique).

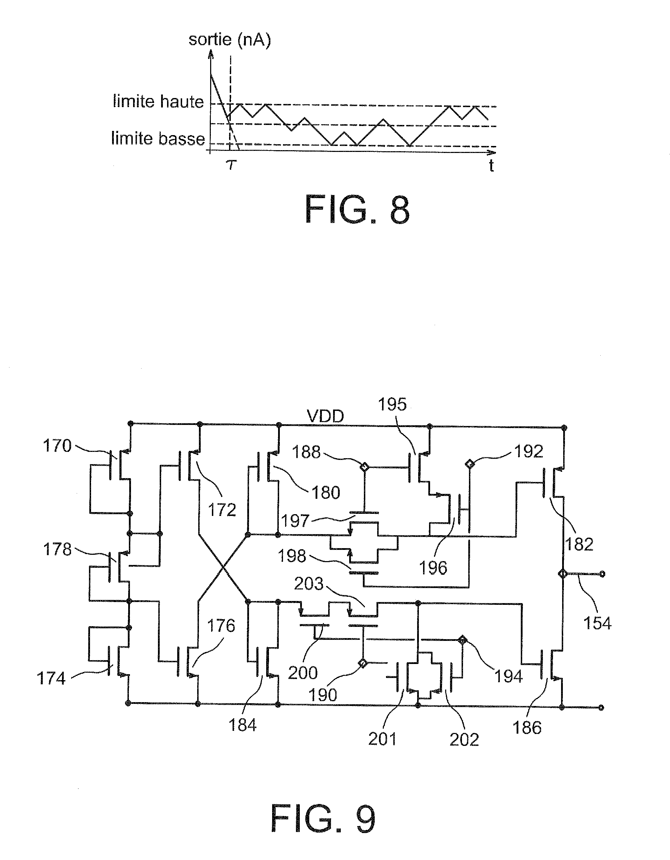

On peut également utiliser plusieurs bits de poids fort (bit de poids le plus fort et un ou plusieurs bits suivants de poids fort) afin d'imposer une limite haute et une limite basse au-delà desquelles le système entre en action pour réguler la valeur moyenne du signal de sortie du capteur. La figure 8 représente la valeur moyenne du signal de sortie du capteur 100 dans un tel cas. Sur cette figure, on voit que lorsque le signal se trouve entre ces deux limites et qu'il atteint l'une de ces deux limites, celui-ci est renvoyé vers l'autre de ces deux limites.

Un exemple de comparateur 106 réalisant une comparaison en prenant en compte les deux bits de poids le plus fort d'un signal numérique entré dans ce comparateur 106 est représenté sur la figure 9.

Ce comparateur 106 comporte deux étages comparatifs. Le premier étage comporte un premier transistor PMOS 170 et un second transistor PMOS 172 montés en miroir de courant. Un premier transistor NMOS 174 et un second transistor NMOS 176 sont également montés en miroir de courant. La structure formée par ces quatre transistors est similaire à celle formée par les quatre transistors 156, 158, 162 et 164 du comparateur 106 représenté sur la figure 6, la résistance 168 de ce comparateur étant ici remplacée par un troisième transistor PMOS 178, jouant le même rôle que la résistance 168. Concernant ce troisième transistor PMOS 178, le rapport de sa largeur W sur sa longueur de canal L est choisi en fonction de la valeur du courant de polarisation I_{bias} souhaité traversant ce transistor 178, c'est-à-dire du courant d'injection ou de retrait de charges désiré. Comme dans le comparateur 106 de la figure 6, les deux transistors 170 et 174 sont dimensionnés tel que le rapport de leur largeur W sur leur longueur de canal L soit égal à N fois le rapport W/L des transistors 172 et 176.

Le second étage est formé par un quatrième transistor PMOS 180 et un cinquième transistor PMOS 182 montés en miroir de courant. Un troisième transistor NMOS 184 et un quatrième transistor NMOS 186 sont également montés en miroir de courant. La structure formée par ces quatre transistors est similaire à celle formée par les quatre transistors 170 à 176. Les deux transistors 180 et 184 sont dimensionnés tel que le rapport de leur largeur W sur leur longueur de canal L soit égal à N fois le rapport W/L des transistors 182 et 186. Le comparateur 106 délivre le résultat de la comparaison sur la sortie 154. On a alors I_{bias} = N² ×**i**,**i** étant le courant qui est chargé ou puisé dans la capacité formée par les grilles des transistors MOS d'injection 114 reliés à la sortie 154 et éventuellement du condensateur 110.

Par exemple, le premier bit de poids le plus fort du signal à comparer est appliqué sur deux bornes d'entrée 188 et 190. Le second bit de poids fort est par exemple appliqué sur deux autres bornes d'entrée 192 et 194. Quatre transistors MOS 195 à 198 forment une porte logique NON OU entre les deux entrées 188 et 192, c'est-à-dire entre les deux bits de poids fort. Quatre autres transistors MOS 200 à 203 forment une porte logique NON ET entre les deux entrées 190 et 194, c'est-à-dire entre les deux bits de poids fort. Ainsi, on ajoute des charges dans la capacité formée par les grilles des transistors MOS d'injection 114 reliés à la sortie 154 et éventuellement du condensateur 110 lorsque les deux bits de poids fort sont à 0 et on enlève des charges lorsque les deux bits de poids fort sont à 1, ce qui permet au signal de sortie de rester entre les limites haute et basse déterminées.

Par rapport au comparateur représenté sur la figure 6, la structure à double étage de ce comparateur 106 permet de corriger les erreurs d'équilibrage des miroirs de courant entre les transistors NMOS et PMOS utilisés dans le comparateur.

## Revendications

1. Capteur d'image thermique (100) comportant au moins :
- une matrice de pixels (102), chaque pixel comportant au moins un bolomètre (112) et des moyens pour appliquer une tension aux bornes du bolomètre (112), et
- des moyens de comparaison (106) reliant une sortie (104) de la matrice de pixels (102) à une entrée (108) des moyens pour appliquer la tension aux bornes du bolomètre (112) de chaque pixel, lesdits moyens de comparaison (106) étant aptes à réaliser une comparaison entre le signal de sortie de la matrice de pixels (102) et une consigne, la valeur de la tension aux bornes du bolomètre (112) de chaque pixel étant déterminée au moins en partie en fonction du résultat de la comparaison.

2. Capteur (100) selon la revendication 1, les moyens pour appliquer la tension aux bornes du bolomètre (112) de chaque pixel comportant un transistor MOS (114), l'entrée (108) de ces moyens étant reliée à la grille du transistor MOS (114).

3. Capteur (100) selon l'une des revendications précédentes, la matrice de pixels (102) comportant au moins des moyens aptes à compenser une partie d'un courant délivré par le bolomètre (112) de chaque pixel.

4. Capteur (100) selon la revendication 3, les moyens aptes à compenser une partie du courant délivré par le bolomètre (112) de chaque pixel comportant au moins un bolomètre de compensation (126).

5. Capteur (100) selon l'une des revendications précédentes, la matrice de pixels (102) comportant au moins des moyens de conversion (116) d'une mesure du bolomètre (112) de chaque pixel en un signal comportant une série d'impulsions, des moyens de comptage (118) des impulsions et des moyens de mémorisation (120) du résultat de comptage des impulsions.

6. Capteur (100) selon la revendication 5, les moyens de conversion (116) comportant au moins un condensateur d'intégration (130) relié à une entrée des moyens de conversion (116) et à une première entrée d'un comparateur (132), une seconde entrée du comparateur (132) étant reliée à un générateur de tension (134).

7. Capteur (100) selon l'une des revendications 1 à 4, la matrice de pixels (102) comportant au moins un amplificateur courant-tension (113) destiné à recevoir en entrée au moins une mesure d'un bolomètre (12) d'un des pixels, la sortie dudit amplificateur courant-tension étant reliée à au moins une entrée d'un échantillonneur bloqueur (121).

8. Capteur (100) selon l'une des revendications précédentes, les moyens de comparaison (106) comportant au moins :
- une première entrée (140) apte à recevoir le signal de sortie de la matrice de pixels (102),
- une seconde entrée (148) apte à recevoir la consigne,
- des moyens aptes à délivrer en sortie des moyens de comparaison (106) un courant de sortie i dont la valeur |i| est fonction d'une tension de polarisation destinée à être appliquée sur les moyens de comparaison (106) et dont le signe est déterminé en fonction du résultat de la comparaison entre le signal de sortie de la matrice de pixels (102) et la consigne,
la valeur de la tension aux bornes du bolomètre (112) étant fonction du courant de sortie i délivré par les moyens de comparaison (106).

9. Capteur (100) selon l'une des revendications 1 à 7, les moyens de comparaison (106) comportant au moins :
- une première entrée (140, 188, 190, 192, 194) apte à recevoir le signal de sortie de la matrice de pixels (102),
- des moyens aptes à délivrer en sortie des moyens de comparaison (106) un courant de sortie i dont la valeur |i| est fonction d'une tension de polarisation obtenue dans les moyens de comparaison (106) et dont le signe est déterminé en fonction du résultat de la comparaison entre le signal de sortie de la matrice de pixels (102) et la consigne,
la valeur de la tension aux bornes du bolomètre (112) étant fonction du courant de sortie i délivré par les moyens de comparaison (106).

10. Capteur (100) selon la revendication 9, lorsque le signal de sortie de la matrice de pixels (102) est numérique, un ou plusieurs bits de poids fort du signal de sortie sont destinés à être appliqués sur une ou plusieurs bornes (140, 188, 190, 192, 194) de la première entrée des moyens de comparaison (106).

11. Capteur (100) selon l'une des revendications 9 ou 10, les moyens de comparaison comportant une pluralité de transistors MOS (142 à 146, 150, 152, 156 à 166, 170 à 186), la valeur de la tension de polarisation étant au moins en partie fonction de la largeur et à la longueur de canal des transistors MOS.

12. Capteur selon l'une des revendications 9 à 11, les moyens de comparaison comportant en outre au moins une résistance, la valeur de la tension de polarisation étant au moins en partie fonction de la valeur de la résistance.

13. Procédé de mesure d'une température par un capteur d'image thermique (100), comportant au moins les étapes suivantes :
- génération d'un signal représentatif de la température mesurée,
- comparaison de la valeur du signal à une consigne,
- correction de la valeur du signal en fonction du résultat de la comparaison.

14. Procédé selon la revendication 13, la génération du signal représentatif de la température mesurée étant obtenue par la mise en oeuvre des étapes suivantes :
- génération d'un premier signal dont la valeur de l'intensité est fonction de la valeur de la température mesurée,
- conversion du premier signal en un second signal impulsionnel dont le nombre d'impulsions est fonction de la valeur de l'intensité du premier signal,
- comptage du nombre d'impulsions du second signal,
le signal représentatif de la température mesurée comportant le nombre d'impulsions comptées.

15. Procédé selon la revendication 14, la correction de la valeur du signal en fonction du résultat de la comparaison étant réalisée en modifiant la valeur de l'intensité du premier signal.

16. Procédé selon l'une des revendications 13 à 15, le signal représentatif de la température mesurée étant un signal numérique, le procédé de mesure étant mis en oeuvre pendant une durée τ = n x Tₜᵣₐₘₑ, avec n : nombre de niveaux de quantification du signal représentatif de la température mesurée, et Tₜᵣₐₘₑ : temps de capture d'une image par le capteur (100).
